# EUROPEAN PATENT APPLICATION

(11) **EP 1 855 479 A1**
(43) Date of publication of application: **14.11.2007**
(21) Application number: 06714272.9
(22) Date of filing: 22.02.2006
(51) Int. Cl.: H04N 7/173, H04N 5/445

(54) **SUBTITLE DISPLAY**

(30) Priority: 28.02.2005 JP 2005054671
(71) Applicant: MATSUSHITA ELECTRIC INDUSTRIAL CO., LTD., Osaka 571-8501 (JP)
(72) Inventor: FUJITA, Takahisa Matsushita Electric Industrial Co.,Ltd., Chuo-ku, Osaka-shi Osaka 540-6319 (JP); MATSUI, Norihiro Matsushita Electric Industrial Co.,Ltd., Chuo-ku, Osaka-shi Osaka 540-6319 (JP)
(74) Representative: Gassner, Wolfgang
(86) International application number: PCT/JP2006/303132
(87) International publication number: WO 2006/092993

(57) **Abstract**

A caption display device is provided in which display settings, such as arrangement of caption/text and the like, can be changed with a consistent operation system independent of the type of a terminal, and caption/text can be viewed even during displaying of a menu or a dialogue. In the caption display device, by causing a document data converting section (105) and a display data generating section (106) to display caption/text, the caption/text can be arranged in a display region using a frame function of a WWW browser. Also, in the caption display device, a display control section (107) is used to enable displaying of a caption using a WWW browser, and a display selecting section (112) is used to enable displaying of caption/text in a video display region, depending on displaying of a menu, a dialogue or the like.

## Description

### TECHNICAL FIELD

The present invention relates to a caption display device for displaying video, caption/text, and the like. More particularly, the present invention relates to a caption display device which can change display settings, such as arrangement of caption/text and the like, with a consistent operation system without depending on the terminal type, and enables the user to view caption/text even when a menu or a dialogue is displayed.

### BACKGROUND ART

In digital television broadcasting, a character string which is displayed on a screen in synchronization with timing of presentation of video or audio (i.e., a television program), is referred to as a "caption". On the other hand, a character string which is displayed on a screen without synchronization with a television program, is referred to as a "text". Hereinafter, captions and texts are collectively referred to as "caption/text".

In digital television broadcasting, closed captioning is employed as a standard in addition to open captioning, which is commonly used in conventional analog television broadcasting and in which a caption/text image is superimposed on video by a sender. In closed captioning, a sender transmits data relating to caption/text independently of video, while a receiver converts the data relating to caption/text (hereinafter referred to as caption/text data) into an image, and superimposes the image on the video for presentation to the user. By employing closed captioning, a receiver can control presence or absence of display of caption/text or the like. In addition, for example, by adding language identifiers to caption/text, the caption/text can be displayed in a language which is desired by the user. Hereinafter, a method for displaying caption/text by closed captioning will be described.

Caption/text data includes character data which represents a character string which is a set of characters, and additional information. By using the additional information, a receiver not only displays the character string on a screen, but also can improve expression of caption/text. Specifically, caption/text can be recognizably represented or emphasized for the user, for example. The additional information about caption/text generally includes the following types of data.

Caption/text display timing data is data representing a time when caption/text is to be displayed. The receiver utilizes caption/text display timing data to achieve synchronization between a caption and a television program. Character size data is data designating a size when a character string is displayed as caption/text. Color data is data designating a color of a character string itself displayed as caption/text or a color of its background. Repetition data is data designating the number of times of repetition of a character string when the same character string is repeatedly displayed, the data being provided so as to reduce the amount of caption/text data. Receiver preset sound reproduction data is data designating sound data previously stored in a receiver so as to reproduce the sound data with timing of displaying a character or a character string.

Among receivers, receivers which are assumed to be set in a predetermined place during use are particularly referred to as a stationary receiver. Stationary receivers are characterized in that the receiver generally has a display screen having a size of more than ten inches. On the other hand, a terminal which is a mobile apparatus which is assumed to be carried by the user and is additionally provided with a digital broadcast receiver function, such as a mobile telephone, a PDA (Personal Digital Assistant), a digital camera, or the like, and a mobile digital broadcast reception-dedicated terminal are referred to as mobile receivers. The mobile receiver is characterized in that the receiver has a display screen having a size of several inches or less (mostly, three inches or less).

Stationary receivers which receive digital broadcast generally convert video data and caption/text data transmitted by a sender into video and a caption/text image, and combine and display the video and the caption/text image on their display screens. On the other hand, mobile receivers which receive digital broadcast generally convert video data and caption/text data transmitted by a sender into video and a caption/text image, and display the video and the caption/text image in separate regions of their display screens.

The difference between the caption/text display methods of stationary receivers and mobile receivers is mainly attributed to the difference between the display screens of the receivers. Stationary receivers have a display screen of as large as more than ten inches. Therefore, even if caption/text is superimposed and displayed on video, the user can recognize the caption/text and the video separately. As video is displayed in a larger size, the expressive power or punch to the user of the video increases. Therefore, in stationary receivers, caption/text is preferably superimposed on and combined with video so that the video can be displayed on the entire display region of the display screen.

On the other hand, mobile receivers have a display screen of as small as several inches or less. Therefore, if caption/text is superimposed and displayed on video, the user may fail to recognize the caption/text or may have difficulty in recognizing the caption/text. Therefore, it is preferable that the display size of video should be reduced and the video and caption/text should be displayed in separate regions. Particularly, in the case of a mobile receiver (terminal) with a television receiver function whose display device is generally longer than it is wide, such as a mobile telephone, if 4: 3 or 16: 9 video is displayed, free display spaces are present in an upper region and a lower region of the display screen. If caption/text is displayed in the free region, a caption/text-dedicated display region can be secured without sacrificing the size of the video display region.

Also, in digital television broadcasting, contents which are transmitted from a sender to a receiver include data broadcast in addition to video, audio, program information, and caption/text. Data broadcast is transmitted as, for example, a BML document represented by BML (Broadcast Markup Language) and a still image, a moving image or the like. In data broadcasting, contents are displayed on a screen for presentation to the user as with video and caption/text. It is preferable that data broadcast should be displayed in a region separately from video in mobile receivers for the same reason as that for caption/text. Specifically, in a caption display device of a mobile receiver or the like, it is preferable that, when video, data broadcast, and caption/text are simultaneously displayed on the display screen, the video, the data broadcast, and the caption/text video should be displayed in separate regions.

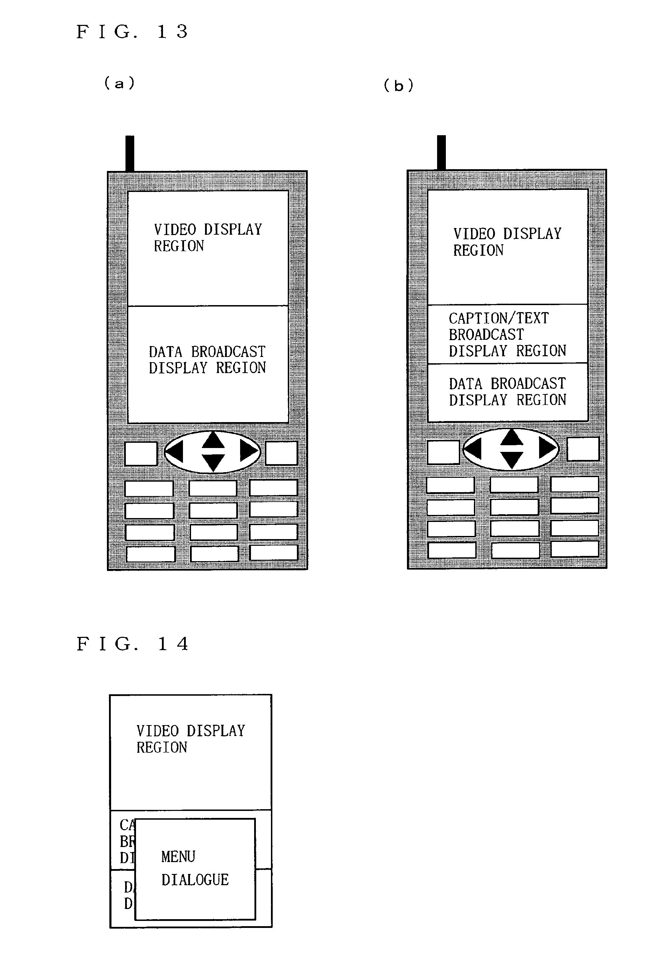

FIG. 13 is a diagram showing exemplary display layouts of data broadcast and caption/text in a mobile receiver. FIG. 13 (a) shows a layout when video and data broadcast are displayed. FIG. 13(b) shows a layout when video, caption/text, and data broadcast are displayed. In FIG. 13(a), since mobile receivers generally have a display screen which is longer than it is wide, a display region for data broadcast is commonly disposed below a display region for video. In FIG. 13(b), when a mobile receiver further displays caption/text, the display region for data broadcast is shared a display region for caption/text. Specifically, the display region for data broadcast is divided into a caption/text region and a data broadcast region. It is preferable that the ratio of the caption/text broadcast display region to the data broadcast display region can be set in accordance with the user's preference.

Further, regarding the method for displaying caption/text and the like, stationary receivers and mobile receivers are different in the definition of the display screen. In stationary receivers, it is possible to provide standard models in terms of the resolution or aspect of the display screen. On the other hand, in mobile receivers, particularly in mobile receivers which are terminals with a digital broadcast receiver function, such as a mobile telephone, a PDA, a digital camera, and the like, the aspect or resolution of the display screen significantly varies depending on the function, application and shape of the terminal. Therefore, it is difficult to provide a standard display model for mobile receivers. Even if a standard display model is provided, it is not possible to provide a display model optimal to each terminal type. Therefore, in conventional mobile receivers, no standard display model is defined, and the method for displaying video and caption/text depends on the implementation of each terminal. A display method depending on the implementation of each terminal is referred to as a conventional display method 1.

As another display method, a method for displaying caption/text using a WWW browser has been disclosed (e.g., Patent Document 1). In the method using the WWW browser, character broadcast data is converted into HTML (Hyper Text Markup Language) data, which is in turn displayed on a display screen using the WWW browser. The WWW browser has a function of optimizing a display layout of contents in terms of the resolution of the display screen and the size of a display region. For terminals having display screens whose resolutions or sizes vary depending on the terminal type (e.g., mobile receivers), the use of a WWW browser for displaying caption/text is effective since the function of optimizing a display layout can be utilized. The method for displaying caption/text using a WWW browser is referred to as a conventional display method 2.
Patent Document 1: Japanese Laid-Open Patent Publication No. 11-18060

### DISCLOSURE OF THE INVENTION

### PROBLEMS TO BE SOLVED BY THE INVENTION

However, according to the conventional display method 1 (i.e., the display method depending on the implementation of each terminal), the operation system relating to screen display, such as the setting of arrangement of the caption/text broadcast display region and the data broadcast display region or the like, also depends on the implementation of each terminal. Therefore, caption display devices employing the conventional display method 1 have a problem that an operation system relating to screen display which is consistent with a terminal-specific operation system needs to be provided for each terminal so as to avoid the user from being confused.

Also, according to the conventional display method 2 (i.e., the display method employing a WWW browser), data broadcast can be only viewed on a WWW browser, and additional information included in caption/text, such as caption/text display timing data, character size data, color data, repetition data, and receiver preset sound reproduction data, cannot be reflected on display on the WWW browser. Therefore, caption display devices employing the conventional display method 2 have poor expressive power.

Further, according to the conventional display methods 1 and 2, when a caption display device displays information about a television presentation function or a menu or a dialogue panel for displaying a warning,the caption/textbroadcast display region is hidden by the displayed menu or dialogue (see FIG. 14). Therefore, caption display devices employing the conventional display methods 1 and 2 have a problem that the user cannot view caption/text while a menu or a dialogue is displayed.

Therefore, an object of the present invention is to provide a caption display device in which a display setting, such as arrangement of caption/text or the like, can be changed by a consistent operation system without depending on the terminal type, and caption/text can be viewed even when a menu or a dialogue is displayed.

### SOLUTION TO THE PROBLEMS

The present invention is directed to a caption display device for obtaining stream data including at least caption/text stream data and section data as content data, and displaying the obtained content data on a screen. To achieve the above-described object, the caption display device of the present invention comprises a stream analyzing section, a document data converting section, a section analyzing section, and a display data generating section.

The stream analyzing section analyzes the caption/text stream data included in the stream data, and outputs caption/text data to be displayed. The section analyzing section analyzes the section data included in the stream data, and converts the section data into first document data. The document data converting section converts the caption/text data output from the stream analyzing section into second document data in the same format as that of the first document data, and outputs the second document data along with layout data designating a display region for the second document data. The display data generating section generates display data relating to caption/text based on the first document data output from the section analyzing section, and the second document data and the layout data output from the document data converting section.

Preferably, the stream analyzing section further outputs caption presentation time information indicating a presentation time for the caption/text data. In this case, the caption display device further comprises a display control section for requesting the display data generating section to update the display data, based on timing indicated by the caption presentation time information. The display data generating section, when receiving the update request from the display control section, updates the display data relating to the caption/text.

Preferably, the caption display device further comprises a presentation data converting section, a video data analyzing section, a display selecting section, a display data synthesizing section, and a video output section. The presentation data converting section converts the caption/text data output from the stream analyzing section into image data, and presents the image data as caption/text image data. The video data analyzing section analyzes video stream data included in the stream data, and outputs video data. The display selecting section determines whether or not the caption/text image data is to be superimposed and displayed on the video data. The display data synthesizing section outputs the video data, or synthesized video display data obtained by superimposing the caption/text image data on the video data, in accordance with the determination by the display selecting section. The video output section displays, on the screen, the video data or synthesized video display data output by the display data synthesizing section, and the display data relating to the caption/text generated by the display data generating section.

The display data synthesizing section outputs the video data when the display selecting section determines that the caption/text image data is not to be superimposed and displayed on the video data. The display data synthesizing section superimposes the caption/text image data on video data, and outputs the synthesized data as the synthesized video display data when the display selecting section determines that the caption/text image data is to be superimposed and displayed on the video data.

Preferably, the display data generating section outputs, as mask data, a bitmap image representing a region for displaying the second document data, in addition to the display data relating to the caption/text. In this case, the caption display device further comprises a video data analyzing section, a display selecting section, a display data synthesizing section, and a video output section. The video data analyzing section analyzes video stream data included in the stream data, and outputs video data. The display selecting section determines whether or not the display data relating to the caption/text is to be superimposed and displayed on the video data. The display data synthesizing section outputs the video data or synthesized video display data obtained by superimposing the bitmap image on the video data, and the display data relating to the caption/text, in accordance with the determination by the display selecting section. The video output section displays, on the screen, the video data or synthesized video display data output by the display data synthesizing section, and the display data relating to the caption/text generated by the display data generating section. The display data synthesizing section outputs the video data and the display data relating to the caption/text when the display selecting section determines that the display data relating to the caption/text is not to be superimposed and displayed on the video data. The display data synthesizing section outputs the synthesized video display data and the display data relating to the caption/text when the display selecting section determines that the display data relating to the caption/text is to be superimposed and displayed on the video data.

The caption display device further comprises a data reception section for receiving content data including the document data in the caption/text data. In this case, the document data converting section extracts the document data from the received caption/text data, and outputs the document data to the display data generating section.

The present invention is also directed to a caption display method for achieving the above-described screen display, a program for executing the caption display method, a storage medium storing the program, and an integrated circuit. The caption display method comprises a stream analyzing step of analyzing caption/text stream data included in stream data, and outputting caption/text data to be displayed, a section analyzing step of analyzing section data included in the stream data, and converting the section data into first document data, a document data converting step of converting the caption/text data output from the stream analyzing step into second document data in the same format as that of the first document data, and outputting the second document data along with layout data designating a display region for the second document data, and a display data generating step of generating display data relating to caption/text based on the first document data output in the section analyzing step, and the second document data and the layout data output in the document data converting step.

### EFFECT OF THE INVENTION

According to the present invention, the document data converting section converts 8 unit code characters representing caption/text input via the stream analyzing section into BML document data, and outputs the BML document data along with layout data for designating a frame to the display data generating section. The display data generating section uses an interpretation/display function of HTML and BML possessed by a WWW browser to generate display data relating to caption/text based on the BML document data output from the document data converting section and contents for data broadcast output from the section analyzing section. Thereby, the caption display device can display caption/text using a WWW browser.

Also, by utilizing a WWW browser to display caption/text, it is possible to arrange a data broadcast display region and a caption/text broadcast display region at the same UI as that of the arrangement setting of frame regions in the WWW browser. Thereby, the caption display device can achieve the same operation system as that of the WWW browser in terms of screen display.

Also, the caption display device can display caption/text with a high level of expressive force by using additional information included in caption/text, such as caption/text display timing data, character size data, color data, repetition data, and receiver preset sound reproduction data.

Also, the display selecting section receives flag data representing a display/non-display process for a menu or the like from an UI display control section, and thereby, instructs the display data synthesizing section to synthesize caption/text and video data when a menu is displayed, and not to synthesize caption/text and video data when a menu is not displayed. Thereby, when the caption/text broadcast display region is hidden by a menu, the caption display device can display caption/text in the video display region. Thus, the user can view caption/text while a menu or a dialogue is displayed.

### BRIEF DESCRIPTION OF THE DRAWINGS

[FIG. 1] FIG. 1 is a block diagram showing an exemplary configuration of a caption display device 101 according to a first embodiment of the present invention.
[FIG. 2] FIG. 2 is a diagram showing exemplary layout data output by the document data converting section 105.
[FIG. 3] FIG. 3 is a diagram showing exemplary 8 unit code characters received as caption/text data.
[FIG. 4] FIG. 4 is a diagram showing exemplary BML document data converted from the 8 unit code characters.
[FIG. 5] FIG. 5 is a diagram showing exemplary BML document data including the function playromsound().
[FIG. 6] FIG. 6 is a diagram showing an exemplary display layout achieved by the video output section 113.
[FIG. 7] FIG. 7 is a block diagram showing an exemplary configuration of a caption display device 201 according to a second embodiment of the present invention.
[FIG. 8] FIG. 8 is a block diagram showing an exemplary configuration of a caption display device 301 according to a third embodiment of the present invention.
[FIG. 9] FIG. 9 is a block diagram showing an exemplary configuration of a caption display device 401 according to a fourth embodiment of the present invention.
[FIG. 10] FIG. 10 is a block diagram showing an exemplary configuration of a caption display device 501 according to a fifth embodiment of the present invention.
[FIG. 11] FIG. 11 is a block diagram showing an exemplary configuration of a caption display device 601 according a sixth embodiment of the present invention.
[FIG. 12] FIG. 12 is a block diagram showing an exemplary configuration of a caption display device 701 according to a seventh embodiment of the present invention.
[FIG. 13] FIG. 13 is a diagram showing exemplary display layouts of data broadcast and caption/text in a mobile receiver.
[FIG. 14] FIG. 14 is a diagram for describing problems with conventional display methods.

### DESCRIPTION OF THE REFERENCE CHARACTERS

101, 201, 301, 401, 501, 601, 701 captiondisplaydevice
102 user operation input section
103, 403 stream analyzing section
104, 404 section analyzing section
105, 605, 723 document data converting section
106, 606 display data generating section
107 display control section
108, 408 video data analyzing section
109 presentation data converting section
110, 610 display data synthesizing section
111 UI display control section
112 display selecting section
113, 213, 313, 613 video output section
114, 414 audio data analyzing section
115, 215, 315, 615 audio output section
416 tuner demodulation section
417 TS analyzing section
516, 722 TS storing section
724 modulation transmission section

### BEST MODE FOR CARRYING OUT THE INVENTION

### (First embodiment)

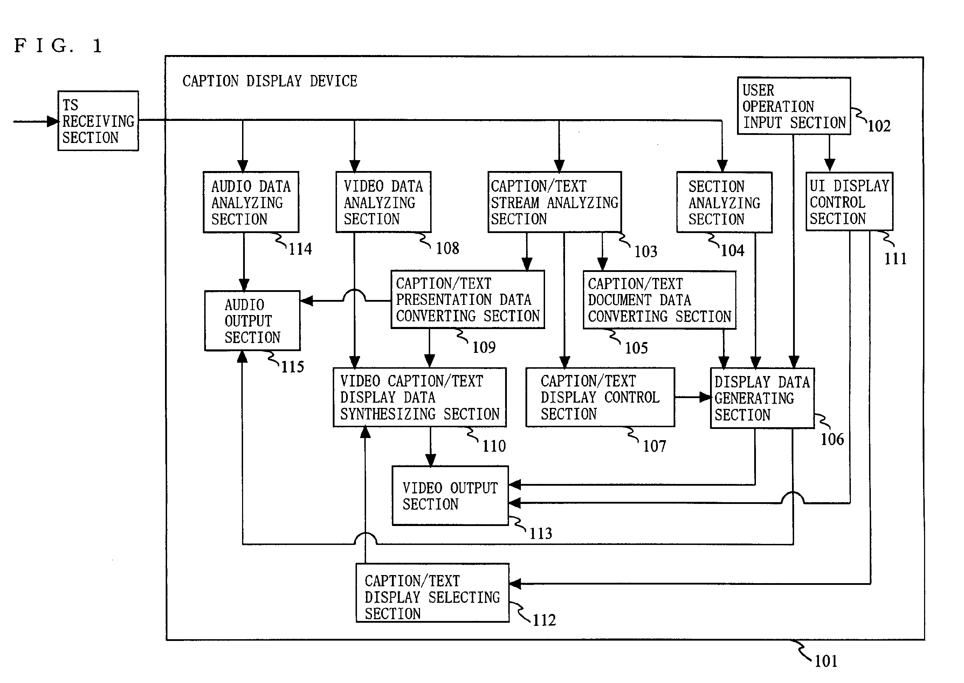

FIG. 1 is a block diagram showing an exemplary configuration of a caption display device 101 according to a first embodiment of the present invention. In FIG. 1, the caption display device 101 comprises a user operation input section 102, a caption/text stream analyzing section 103 (hereinafter simply referred to as a stream analyzing section 103), a section analyzing section 104, a caption/text document data converting section 105 (hereinafter simply referred to as a document data converting section 105), a display data generating section 106, a caption/text display control section 107 (hereinafter simply referred to as a display control section 107), a video data analyzing section 108, a caption/text presentation data converting section 109 (hereinafter simply referred to as a presentation data converting section 109), a video caption/text display data synthesizing section 110 (hereinafter simply referred to as a display data synthesizing section 110), an UI display control section 111, a caption/text display selecting section 112 (hereinafter simply referred to as a display selecting section 112), a video output section 113, an audio data analyzing section 114, and an audio output section 115.

The caption display device 101 receives via a TS receiving section an MPEG2-TS (MPEG2 System Transport Stream), which is data of the transport stream type in the MPEG2 system.

The user operation input section 102 is implemented with, for example, a combination of a keypad device of a mobile telephone and software for checking a state of the keypad device. The user operation input section 102 detects when the keypad device is pressed down, and outputs information input by the user as a key event.

The stream analyzing section 103 analyzes a PES (Packetized Elementary Stream), which is included in an MPEG2-TS received as caption/text stream data, as data in which caption/text data is stored. The stream analyzing section 103 is implemented with, for example, software. The stream analyzing section 103 analyzes the PES in which caption/text data is stored, and outputs a display start time as caption presentation time information and 8-unit-character code data (data unit data) as the caption/text data. The caption presentation time information is represented by, for example, a 36-bit numerical value. For example, the stream analyzing section 103 uses a PTS (Presentation Time Stamp) in the PES as the caption presentation time information. For example, when a time control mode in the PES is immediate reproduction, the stream analyzing section 103 can use the current time as the caption presentation time information.

The section analyzing section 104 converts data in the section format which is included in an MPEG2-TS received as section data, into BML document data indicating contents for data broadcast. The section analyzing section 104 is implemented with, for example, software. In digital broadcasting, the BML document data is transferred by the DSMCC (Digital Storage Media Command and Control) scheme employing the section format. The section analyzing section 104 analyzes a DDB (Download Data Block) message and a DII (Download Info Indication) message, which are transferred on a section in accordance with the DSMCC scheme, to extract BML document data, which is a resource represented by DDB and DII.

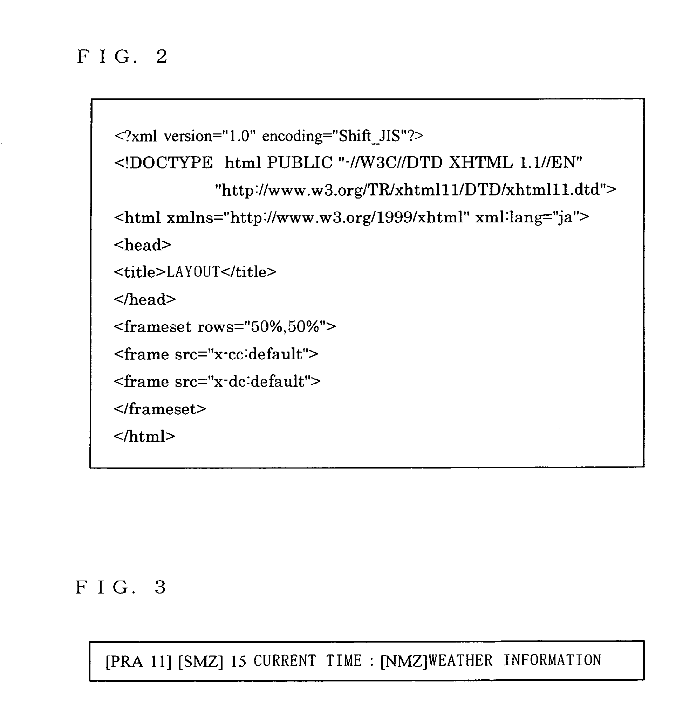

The document data converting section 105 receives 8 unit code characters as caption/text data from the stream analyzing section 103. The document data converting section 105 converts the received 8 unit code characters, and outputs BML document data, and layout data which is an HTML document including FRAME elements. The document data converting section 105 is implemented with, for example, software. FIG. 2 is a diagram showing exemplary layout data output by the document data converting section 105. In FIG. 2, the layout data indicates that, in an initial state, a data broadcast display region is divided into two (upper and lower) portions, and caption/text is displayed in the upper half while a data broadcast is displayed in the lower half. Specifically, a first FRAME element, i.e. , an SRC attribute value "x-cc: default", designates BML document data which is output from the document data converting section 105. A second FRAME element, i.e., an SRC attribute value "x-dc: default", designates BML document data which is output from the section analyzing section 104.

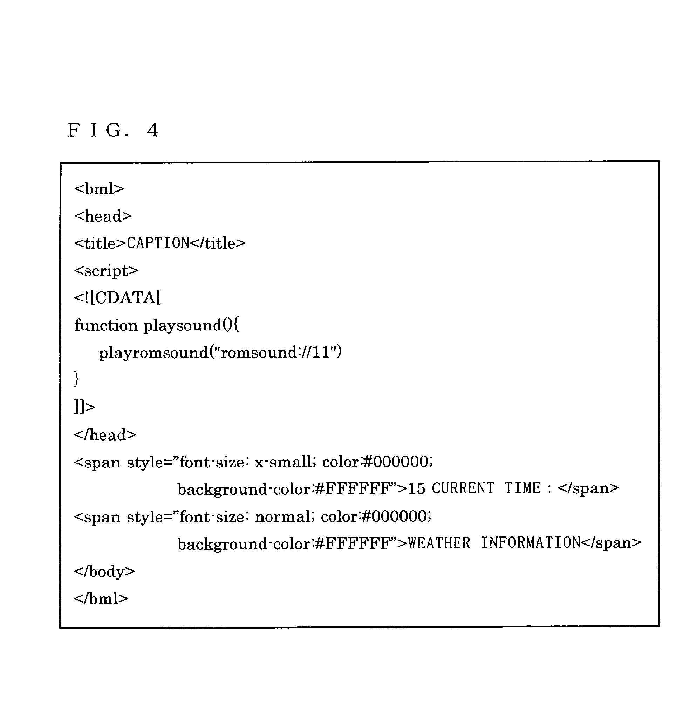

The document data converting section 105 carries out the conversion from 8 unit code characters to BML document data using a predetermined method. FIG. 3 is a diagram showing exemplary 8 unit code characters received as caption/text data. FIG. 4 is a diagram showing exemplary BML document data converted from the 8 unit code characters. In FIG. 3, a character string enclosed with "[" and "]" represents control characters, and a numeral (s) described immediately after a control character type represents a parameter for the control character. Since the 8 unit code characters (see FIG. 3) includes control characters representing preset sound reproduction data or character size data, the document data converting section 105 includes a function playromsound (), and outputs BML document data whose style (character size) has been designated (see FIG. 4). A specific method for converting 8 unit code characters into BML document data will be described in detail below.

The display data generating section 106 receives BML document data representing contents for data broadcast from the section analyzing section 104, and BML document data and layout data representing caption/text from the document data converting section 105. The display data generating section 106 is, for example, WWW browser software capable of interpreting and displaying HTML or BML. The display data generating section 106 generates display data relating to caption/text in accordance with a tag or a function declaration designated by HTML or BML included in the received BML document data or layout data.

In an SRC attribute designated by a FRAME element in the received layout data, an URL indicating the BML document data is stored. The display data generating section 106 determines a layout method for a plurality of pieces of BML document data based on a rows attribute or a cols attribute of a FRAME SET element included in the layout data. When receiving the layout data of FIG. 2, the display data generating section 106 divides the display region into two (upper and lower) portions, and displays BML document data indicated by an URI "x-cc: default" in the upper half and BML document data indicated by an URI "x-dc: default" in the lower half. The display data generating section 106 recognizes "x-cc: default" as an URI representing BML document data output from the document data converting section 105, and "x-dc: default" as an URI representing BML document data output from the section analyzing section 104.

The display data generating section 106 uses the analysis/display function of HTML and BML to perform conversion into bitmap data as display data based on BML document data designated by a FRAME element and a layout designated by a FRAME SET element. When the BML document data includes the function playromsound () and the function is executed during interpretation of the BML document data, the display data generating section 106 outputs, as audio presentation data, preset sound data which is designated by an argument of the function playromsound () and is previously stored in a ROM or a RAM. In this case, a time stamp representing audio time information can be considered as the current time. The preset sound data is represented in, for example, the PCM (Pulse Code Modulation) format.

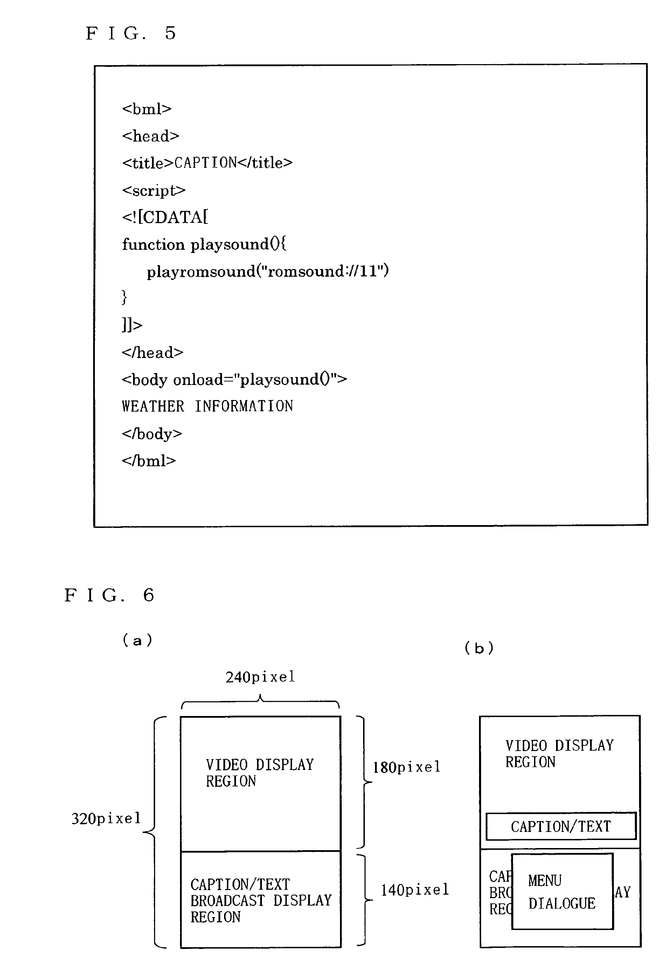

FIG. 5 is a diagram showing exemplary BML document data including the function playromsound (). The display data generating section 106 provides an interface for receiving a request for updating of display data with respect to external software, as an update request function. The display data generating section 106, when the update request function for display data is called from external software or the like, receives again and interprets the BML document data, and outputs display data and audio presentation data. In the display data generating section 106, a parameter for designating document data is prepared in the update request function so as to designate a specific piece of document data and update display data when a plurality of pieces of document data are displayed in accordance with layout data. When receiving a key event from the user operation input section 102, the display data generating section 106 updates display data as required in response to an input to a WWW browser, such as a change or scrolling in a frame region, pressing down of a link, or the like.

The display control section 107 receives caption presentation time information from the stream analyzing section 103. When a time indicated by the caption presentation time information has arrived, the display control section 107 calls the update request function of the WWW browser software (the display data generating section 106). Thereby, the display data generating section 106 can update caption display with timing in synchronization with a television program.

The video data analyzing section 108 analyzes a PES included in an MPEG2-TS received as video stream data, as data in which video is stored. The video data analyzing section 108 is implemented by, for example, software, such as a decoder or the like. Video stream data stored in the PES is, for example, data in the video ES (Elementary Stream) format of MEPG4 AVC. The video data analyzing section 108 analyzes the video stream data and outputs video data in the YUV format. In this case, a PTS in the PES can be used as a time stamp indicating video time information.

The presentation data converting section 109 receives 8 unit code characters and caption presentation time information as caption/text data from the stream analyzing section 103. The presentation data converting section 109 converts the caption/text data into an image in the bitmap format in accordance with display timing indicated by the caption presentation time information, and outputs the result as caption/text image data. The presentation data converting section 109 is implemented with, for example, software. Specifically, the presentation data converting section 109 analyzes the 8 unit code characters received as the caption/text data, and generates image data in the bitmap format which representscaption/text,using a characterfontstored in a ROM or a RAM. The presentation data converting section 109, when converting text/caption into a bitmap image, considers a character size, a character color, a background color, and the number of times of repetition of characters, in accordance with control data included in the 8 unit code characters. The presentation data converting section 109 outputs, as caption/text image data, a bitmap image in which a character font is represented as caption/text, and a bitmap mask image for performing alpha synthesis while distinguishing a region indicating a text from the other regions.

When a control character (s) indicating receiver preset sound reproduction data is included in the control data included in the 8 unit code characters, the presentation data converting section 109 outputs preset sound data in the PCM format which is previously stored in a ROM or a RAM, as audio presentation data, based on a parameter designated by the control character. In this case, a time stamp indicating the audio time information is assumed to be a time of a time stamp received as caption presentation time information.

The display data synthesizing section 110 receives video data in the YUV format from the video data analyzing section 108 and caption/text image data in the bitmap format from the presentation data converting section 109. The display data synthesizing section 110, when designated by the display selecting section 112, superimposes and synthesizes the caption/text image data on the video data. The display data synthesizing section 110 is implemented by, for example, video processing software. The display data synthesizing section 110 provides an interface for designating whether or not superimposition is to be performed, with respect to external software, as a superimposition designating function. The superimposition designating function has a truth value parameter indicating whether or not superimposition is to be performed. When it is designated that superimposition is performed with external software or the like, the display data synthesizing section 110 analyzes each frame of video data in the YUV format, alpha-synthesizes the received bitmap image with the video data based on the bitmap mask image, and converts the result of the alpha synthesis into frames of video data in the YUV format again and outputs the result. When the superimposition designating function indicates that superimposition is not to be performed, the display data synthesizing section 110 outputs the received video data as it is. The display data synthesizing section 110 also outputs, as video time information, the time stamp of the received video time information as it is.

The UI display control section 111 receives a key event from the user operation input section 102. Based on the received key event, the UI display control section 111 displays or erases a menu or a dialogue. The UI display control section 111 is implemented with, for example, software. The UI display control section 111, when a menu key on the keypad is pressed down, generates a bitmap image indicating an UI menu and a bitmap mask image (hereinafter, the generated image is referred to as a menu image). The UI display control section 111, when performing a menu display/non-display process, outputs flag data as UI display data. The flag data is set to be "true" when the menu display process is performed, and "false" when the menu non-display process is performed.

The display selecting section 112 receives flag data from the UI display control section 111. Based on the truth value of the received flag data, the display selecting section 112 designates whether or not caption/text image data is to be superimposed on video data by calling the superimposition designating function of the display data synthesizing section 110. The display selecting section 112 is implemented with, for example, software. When the flag data is set as true, the display selecting section 112 calls the superimposition designating function of the display data synthesizing section 110 with the parameter being set to be true (i.e., superimposition is designated). When the flag data is set as false, the display selecting section 112 calls the superimposition designating function of the display data synthesizing section 110 with the parameter being set to be false (i.e., superimposition is not designated).

The display selecting section 112, when displaying a menu, superimposes and synthesizes caption/text on a video display region. On the other hand, the display selecting section 112, when not displaying a menu, does not superimpose or synthesize caption/text on the video display region. Thereby, the display selecting section 112 can display caption/text in the video display region even when a caption/text broadcast display region is hidden by menu display.

The video output section 113 receives video data from the display data synthesizing section 110, and display data relating to caption/text from the display data generating section 106. When the user performs a predetermined key operation, the video output section 113 receives a menu image via the display selecting section 112. The video output section 113 displays, on a display screen, video data, caption/text, a menu screen and the like which have been received. The video output section 113 is implemented by, for example, a combination of a display screen, and software for controlling layout display on the display screen.

FIG. 6 is a diagram showing an exemplary display layout achieved by the video output section 113. FIG. 6 shows a case where a liquid crystal display having a resolution of QVGA (length: 320 pixels, width: 240 pixels) is employed as a display screen. The video output section 113 displays video data in a rectangular region (hereinafter referred to as a video display region) of 180 pixels (length) and 240 pixels (width) in an upper portion of the liquid crystal display, and display data in a rectangular region (hereinafter referred to as a caption/text broadcast display region) of 140 pixels (length) and 240 pixels (width) in a lower portion of the display (see FIG. 6(a)).

When having received a menu image, the video output section 113 has received video data synthesized with caption/text from the display data synthesizing section 110. Therefore, the video output section 113 displays the video data synthesized with the caption/text in the video display region. The video output section 113 displays the received menu image in front of the display data (i.e., the caption/text broadcast display region) (see FIG. 6 (b)).

The audio data analyzing section 114 analyzes a PES included in an MPEG2-TS received as audio stream data, as data in which audio is stored, and outputs audio presentation data to the audio output section 115. The audio data analyzing section 114 is implemented by, for example, software, such as a decoder or the like. The audio streamdata stored in the PES is, for example, data in the AAC (Advanced Audio Coding) ES format. The audio data analyzing section 114 analyzes the audio stream data in the AAC ES format and outputs audio presentation data in the PCM format. In this case, a PTS in the PES can be used as a time stamp indicating audio time information.

The audio output section 115 receives audio presentation data from the audio data analyzing section 114, the presentation data converting section 109, and the display data generating section 106. The audio output section 115 mixes audio received as the audio presentation data and presents the result to the user. The audio output section 115 is implemented by, for example, a combination of hardware (e.g., a loudspeaker, etc.) and software. The audio output section 115 outputs the audio received as the audio presentation data in accordance with times described in respective corresponding time stamps.

Here, a specific exemplary method for converting 8 unit code characters into BML document data, which is performed by the document data converting section 105, will be described. The document data converting section 105 sequentially analyzes a byte string represented by 8 unit code characters from its head, and generates body data and header data. An initial value of the body data is a character string "<body>" . An initial value of the header data is a character string "<bml><head><title>caption</title><script><![CDATA[function playsound(){}". The document data converting section 105 has a character set table type which is currently used as an internal state, and character font information in which display designation of a current character font is saved. The character font information has attributes, i.e., a size, a foreground color, and a background color. An initial value of the size attribute is "normal", an initial value of the foreground color attribute is "#000000", and an initial value of the background color is "#FFFFFF".

Character size data which is additional information in caption/text data is represented by control characters, such as SSZ, MMZ, NSZ or the like, in 8 unit code characters. Color data is represented by control characters, such as BKF, RDF, CSI or the like. Assuming that a byte string represented by 8 unit code characters is sequentially analyzed from the head, when the byte string represents normal characters, the byte string is converted into shift JIS codes based on the current character set table, and the result is added to the body data. When a control character(s) (e.g., a locking shift, etc.) representing changing of character set tables is present, a character set table which is currently used as an internal state of the document data converting section 105 is changed, and nothing is added to the body data. When control characters representing character size data appear, a character string "</span>" is added to the body data (note that, when the character string "<span" has never been added to the body data, "</span>" is not added).

When control characters representing character size data are SMZ, "x-small" is set as a character string to the size attribute in the character font information. When control characters representing character size data are MMZ, "small" is set as a character string to the size attribute in the character font information. When control characters representing character size data are NMZ, "normal" is set as a character string to the size attribute in the character font information. Next, "span style="font-size:" is added to the body data. Next, the character string stored in the size attribute of the character font information is added to the body data. Next, ";color:" is added to the body data. Next, a character string stored in the foreground color attribute of the character font information is added to the body data. Next, "background-color:" is added to the body data. Next, a character string stored in the background color attribute of the character font information is added to the body data. Next, "">" is added.

When control characters representing color data appear, character strings in the "#RRGGBB" format (RGB designation) are set to the foreground color attribute and the background color attribute of the character font information in accordance with a foreground color and a background color designated by the control characters. In the case of control characters which designate only one of a foreground color and a background color, the attribute value of the other is not set. Next, "<span style="font-size:" is added to the body data. Next, a character string stored in the size attribute of the character font information is added to the body data. Next, ";color:" is added to the body data. Next, a character string stored in the foreground color attribute of the character font information is added to the body data. Next, "background-color:" is added to the body data. Next, a character string stored in the background color attribute of the character font information is added to the body data. Next, "">" is added. When control characters (e.g., RPC) representing the repetition data appear, characters appearing immediately after the control characters are added a number of times designated by the control characters RPC (parameter). When control characters (e.g., PRA) representing receiver preset sound reproduction data appear, "playromsound("romsound://" is added to the header data. Next, a numeral(s) in the decimal number format representing a preset sound designator designated by a parameter of the control characters PRA is added as a character string to the header data. After the analysis of the character string of the 8 unit code characters is completed, "</body></bml>" is added to the body data, and "}]]></head>" is added to the header data. The body data are added to the header body, resulting in BML document data representing caption/text.

As described above, according to the caption display device 101 of the first embodiment of the present invention, the document data converting section 105 converts 8 unit code characters representing caption/text received via the stream analyzing section 103 into BML document data, and outputs the BML document data along with layout data designating a frame to the display data generating section 106. The display data generating section 106 uses an interpretation/display function of HTML and BML possessed by a WWW browser to generate display data relating to caption/text based on the BML document data output from the document data converting section 105 and contents for data broadcast output from the section analyzing section 104. Thereby, the caption display device 101 can display caption/text using a WWW browser.

Also, by utilizing a WWW browser to display caption/text, it is possible to arrange the data broadcast display region and the caption/text broadcast display region at the same UI as that of the arrangement setting of frame regions in the WWW browser. Thereby, the caption display device 101 can achieve the same operation system as that of the WWW browser in terms of screen display.

Also, the caption display device 101 can display caption/text with a high level of expressive force by using additional information included in caption/text, such as caption/text display timing data, character size data, color data, repetition data, and receiver preset sound reproduction data.

Also, the display selecting section 112 receives flag data representing a display/non-display process for a menu or the like from the UI display control section 111, and thereby, instructs the display data synthesizing section 110 to synthesize caption/text and video data when a menu is displayed, and not to synthesize caption/text and video data when a menu is not displayed. Thereby, when the caption/text broadcast display region is hidden by a menu, the caption display device 101 can display caption/text in the video display region. Thus, according to the caption display device 101, the user can view caption/text while a menu or a dialogue is displayed.

### (Second embodiment)

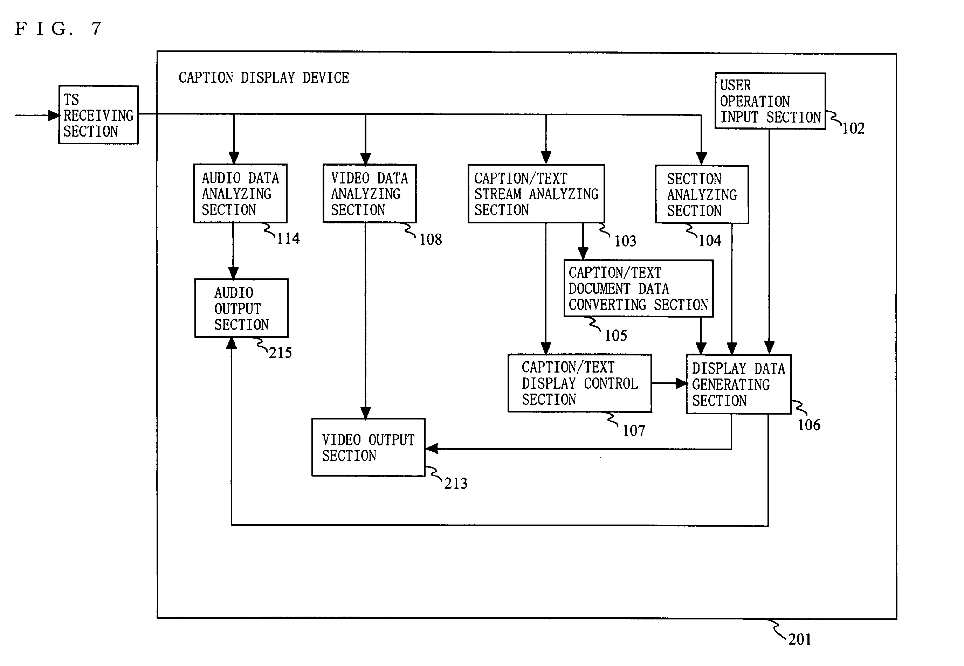

FIG. 7 is a block diagram showing an exemplary configuration of a caption display device 201 according to a second embodiment of the present invention. In FIG. 7, the same parts as those of the first embodiment are indicated by the same reference numerals and will not be described. In FIG. 7, the caption display device 201 comprises a user operation input section 102, a stream analyzing section 103, a section analyzing section 104, a document data converting section 105, a display data generating section 106, a display control section 107, a video data analyzing section 108, a video output section 213, an audio data analyzing section 114, and an audio output section 215.

The caption display device 201 of the second embodiment is different from the caption display device 101 of the first embodiment in that parts for synthesizing a menu or a dialogue and video data (i.e., the presentation data converting section 109, the display data synthesizing section 110, the UI display control section 111, and the display selecting section 112) are removed.

In FIG. 7, the video output section 213 receives video data from the video data analyzing section 108, and display data relating to caption/text from the display data generating section 106. The video output section 213 displays the received video data and caption/text on a display screen. The audio output section 215 receives audio presentation data from the audio data analyzing section 114 and the display data generating section 106. The audio output section 215 mixes audio received as the audio presentation data and presents the result to the user.

As described above, the caption display device 201 of the second embodiment of the present invention displays caption/text using a WWW browser as in the first embodiment. Therefore, it is possible to arrange a data broadcast display region and a caption/text broadcast display region at the same UI as that of the arrangement setting of frames in the WWW browser. Thereby, the caption display device 201 can achieve the same operation system as that of the WWW browser in terms of screen display.

Also, the caption display device 201 can display caption/text with a high level of expressive force by using additional information included in caption/text, such as caption/text display timing data, character size data, color data, repetition data, and receiver preset sound reproduction data.

### (Third embodiment)

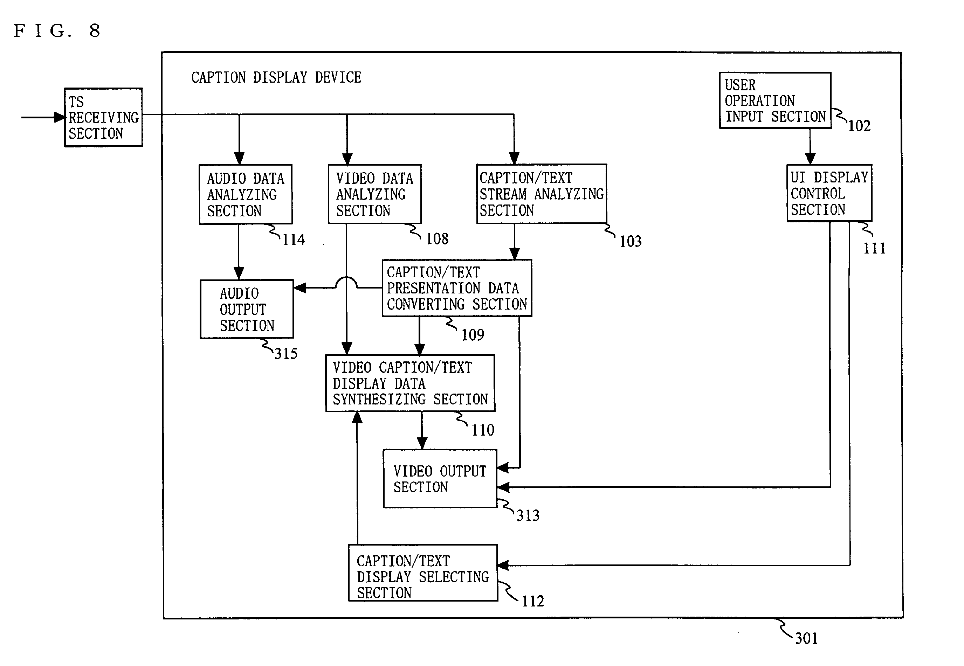

FIG. 8 is a block diagram showing an exemplary configuration of a caption display device 301 according to a third embodiment of the present invention. In FIG. 8, the same parts as those of the first and second embodiments are indicated by the same reference numerals and will not be described. In FIG. 8, the caption display device 301 comprises a user operation input section 102, a stream analyzing section 103, a video data analyzing section 108, a presentation data converting section 109, a display data synthesizing section 110, a UI display control section 111, a display selecting section 112, a video output section 313, a audio data analyzing section 114, and an audio output section 315.

The caption display device 301 of the third embodiment is different from the caption display device 101 of the first embodiment in that the section analyzing section 104, the document data converting section 105, the display data generating section 106, and the display control section 107 are removed.

In FIG. 8, the video output section 313 receives video data from the display data synthesizing section 110, and caption/text image data from the presentation data converting section 109. Also, when the user performs a predetermined key operation, the video output section 313 receives a menu image via the display selecting section 112.

The video output section 313 displays video data in the video display region, and caption/text image data in the caption/text broadcast display region (see FIG.6(a)). Also, when having received a menu image, the video output section 313 has received video data synthesized with caption/text from the display data synthesizing section 110. Therefore, the video output section 313 displays the video data synthesized with the caption/text in the video display region. The video output section 313 displays the received menu image in the caption/text broadcast display region (see FIG. 6(b)).

The audio output section 315 receives audio presentation data from the audio data analyzing section 114 and the presentation data converting section 109. The audio output section 215 mixes audio received as audio presentation data and presents the result to the user.

As described above, the caption display device 301 of the third embodiment of the present invention can display caption/text in the video display region when the caption/text broadcast display region is hidden by a menu, as in the first embodiment. Thus, according to the caption display device 301, the user can view caption/text while a menu or a dialogue is displayed.

### (Fourth embodiment)

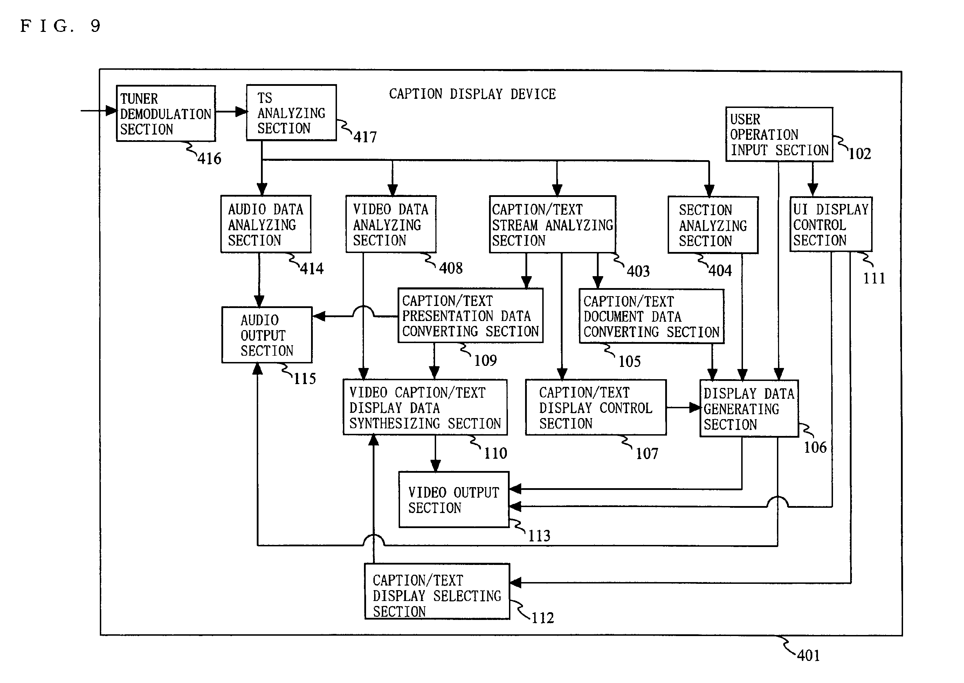

FIG. 9 is a block diagram showing an exemplary configuration of a caption display device 401 according to a fourth embodiment of the present invention. In FIG. 9, the same parts as those of the first to third embodiments are indicated by the same reference numerals and will not be described. In FIG. 9, the caption display device 401 comprises a user operation input section 102, a stream analyzing section 403, a section analyzing section 404, a document data converting section 105, a display data generating section 106, a display control section 107, a video data analyzing section 408, a presentation data converting section 109, a display data synthesizing section 110, an UI display control section 111, a display selecting section 112, a video output section 113, an audio data analyzing section 414, an audio output section 115, a tuner demodulation section 416, and a TS analyzing section 417.

The tuner demodulation section 416 is implemented by, for example, a combination of tuner hardware and demodulation software for receiving and demodulating carrier waves of the OFDM (Orthogonal Frequency Division Multiplexing) scheme to transport stream data in which digital television broadcast contents are stored. The transport stream data is, for example, data in the transport stream formant of the MPEG2 system. The tuner demodulation section 416 outputs demodulated transport stream data.

The TS analyzing section 417 is, for example, software which receives and analyzes transport stream data and outputs audio stream data, video stream data, and caption/text stream data in the PES format and section data in the section format which are multiplexed in the transport stream data.

The stream analyzing section 403 is the same as the stream analyzing section 103 of the first embodiment, except that caption/text stream data is input from the TS analyzing section 417. The section analyzing section 404 is the same as the section analyzing section 104 of the first embodiment, except that section data is input from the TS analyzing section 417. The video data analyzing section 408 is the same as the video data analyzing section 108 of the first embodiment, except that video stream data is input from the TS analyzing section 417. The audio data analyzing section 414 is the same as the audio data analyzing section 117 of the first embodiment, except that audio stream data is input from the TS analyzing section 417.

As described above, according to the caption display device 401 of the fourth embodiment of the present invention, an effect similar to that of the first embodiment can be obtained. Also, the caption display device 401 comprises the tuner demodulation section 416and the TS analyzing section 417, thereby making it possible to directly receive television broadcast from a sender.

### (Fifth embodiment)

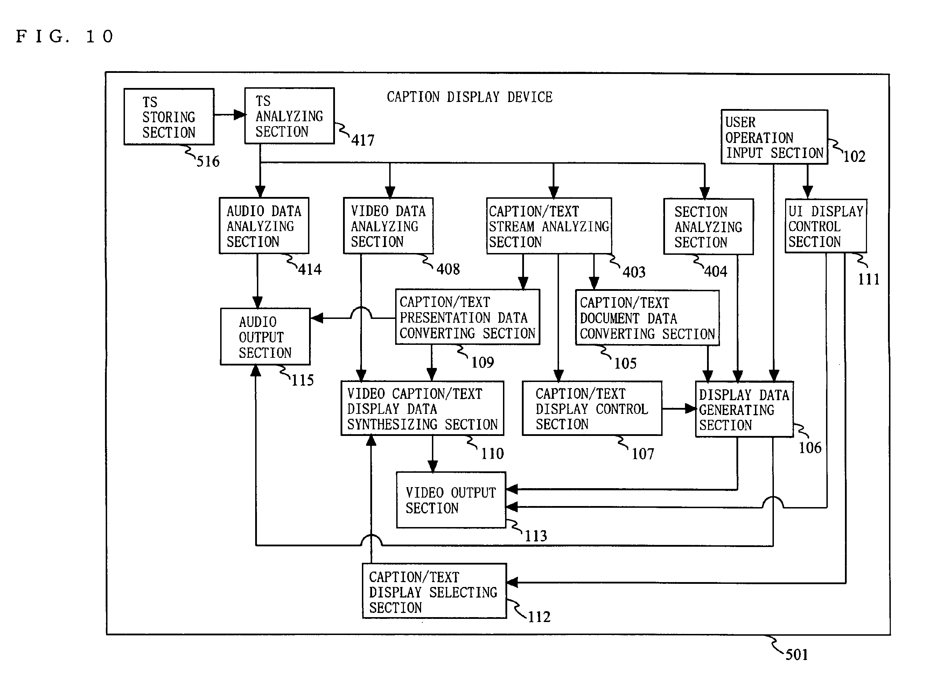

FIG. 10 is a block diagram showing an exemplary configuration of a caption display device 501 according to a fifth embodiment of the present invention. In FIG. 10, the same parts as those of the first to fourth embodiments are indicated by the same reference numerals and will not be described. In FIG. 10, the caption display device 501 of the fifth embodiment has the same configuration as that of the caption display device 401 of the fourth embodiment, except that a TS storing section 516 is provided instead of the tuner demodulation section 416.

The TS storing section 516 is implemented by, for example, a combination of memory device hardware and control software. The memory device hardware is a medium or a read device, such as a stationary hard disk, a USB-connection memory, a RAM, a ROM, a DVD (Digital Versatile Disc), a BD (Blue-ray Disc), an HD DVD (High Definition DVD), an SD (Secure Digital) memory card, or the like. The TS storing section 516 outputs transport stream data stored in the memory device hardware by a control of the control software.

As described above, according to the caption display device 501 of the fifth embodiment of the present invention, an effect similar to that of the first embodiment can be obtained. Also, the caption display device 501 comprises the TS storing section 516 and the TS analyzing section 417, thereby making it possible to display television broadcast contents stored in the device in a caption.

### (Sixth embodiment)

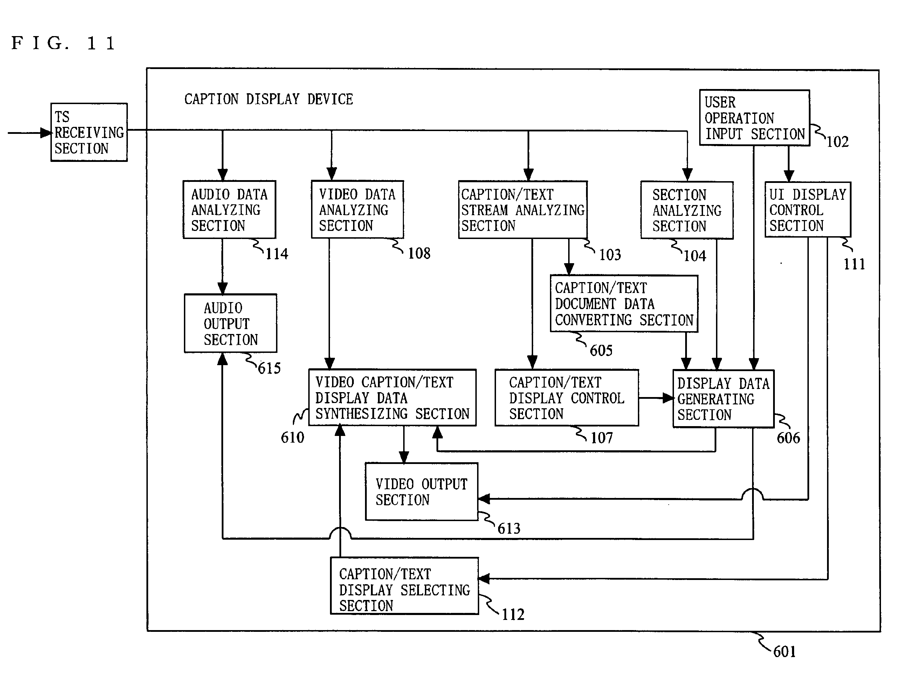

FIG. 11 is a block diagram showing an exemplary configuration of a caption display device 601 according a sixth embodiment of the present invention. In FIG. 11, the same parts as those in the first to fifth embodiments are indicated by the same reference numerals and will not be described. In FIG. 11, the caption display device 601 of the sixth embodiment comprises a user operation input section 102, a stream analyzing section 103, a section analyzing section 104, a document data converting section 605, a display data generating section 606, a display control section 107, a video data analyzing section 108, a display data synthesizing section 610, an UI display control section 111, a display selecting section 112, a video output section 613, an audio data analyzing section 114, and an audio output section 615.

The display data generating section 606 outputs the above-described display data relating to caption/text and, in addition, a bitmap mask image relating to a region in which document data indicated by an URI "x-cc: default" is displayed, as mask data. Further, the display data generating section 606 may output a height of the document data indicated by the URI "x-cc: default" as a caption display length. The display data generating section 606 is the same as the display data generating section 106 of the first embodiment, except for the above-described point.

The document data converting section 605, when receiving a BML document as caption/text data, but not 8 unit code characters, does not perform the conversion described in the first embodiment, and outputs the received caption/text data as it is, as BML document data indicating display data. The document data converting section 605 is the same as the document data converting section 105 of the first embodiment, except for the above-described point.

The display data synthesizing section 610 receives video data from the video data analyzing section 108, and display data, mask data and a caption display length relating to caption/text from the display data generating section 606. The display data synthesizing section 610 is, for example, software which outputs display data having a resolution of QVGA (length: 320 pixels, width: 240 pixels).

The display data synthesizing section 610 arranges the video data in a rectangular region (length: 180 pixels, width: 240 pixels) at an upper portion of the display, and the display data relating to caption/text in a rectangular region (length: 140 pixels, width: 240 pixels) at a lower portion of the display. Further, when instructed by a superimposition designating function fromexternal software to superimpose the video data and the display data relating to caption/text, the display data synthesizing section 610 arranges and superimposes the video data and the display data relating to caption/text in the rectangular region (length: 180 pixels, width: 240 pixels) at the upper portion of the display. Specifically, the display data synthesizing section 610 alpha-synthesizes the display data relating to caption/text with respect to the video data based on the mask data and the caption display length, and outputs the synthesized data as synthesized video display data. The display data synthesizing section 610 is the same as the display data synthesizing section 110 of the first embodiment, except for the above-described point.

The video output section 613 receives a time stamp as video time information, video data or synthesized video display data, and display data relating to caption/text from the display data synthesizing section 610. The video output section 613 displays, on a display screen, the received video data or synthesized video display data, and display data relating to caption/text. The video output section 613 is the same as the video output section 113 of the first embodiment, except for the above-described point.

Note that the video output section 613, when instructed by the user via the user operation input section 102 to enlarge and display video data, may display the above-described synthesized video display data on the entire region of the display screen. Thereby, the user can view video data on which caption/text data is superimposed, using the entire region of the display screen.

The audio output section 615 receives audio data in the PCM format as audio presentation data from the audio data analyzing section 114, and a time stamp as audio time information from the display data generating section 606. The audio output section 615 is the same as the audio output section 615 of the first embodiment, except for the above-described point.

As described above, according to the caption display device 601 of the sixth embodiment of the present invention, an effect similar to that of the first embodiment can be obtained.

### (Seventh embodiment)

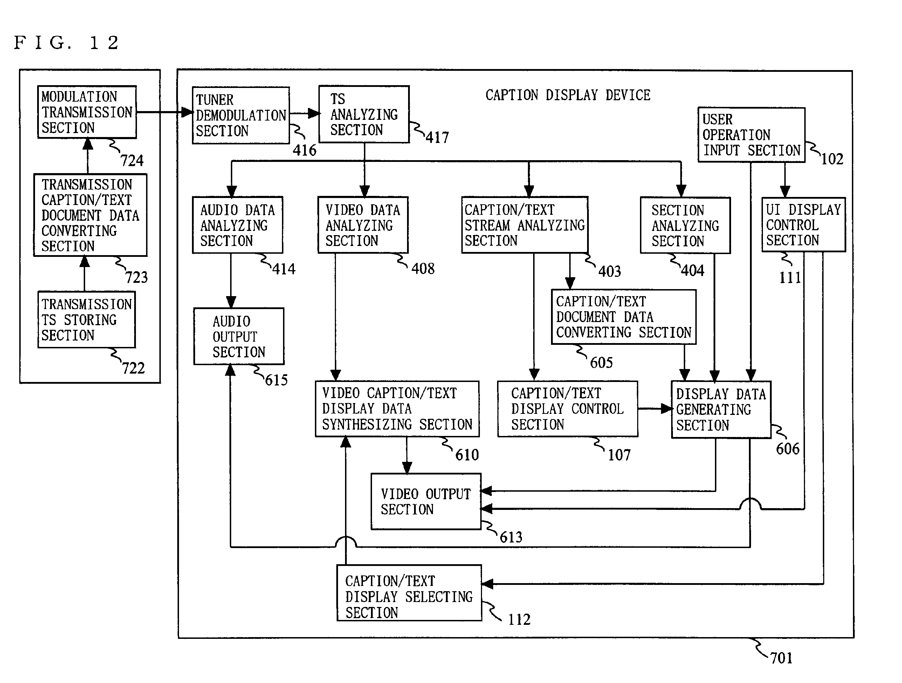

FIG. 12 is a block diagram showing an exemplary configuration of a caption display device 701 according to a seventh embodiment of the present invention. In FIG. 12, the same parts as those of the first to sixth embodiments are indicated by the same reference numerals and will not be described. In FIG. 12, the caption display device 701 comprises a user operation input section 102, a stream analyzing section 403, a section analyzing section 404, a document data converting section 605, a display data generating section 606, a display control section 107, a video data analyzing section 408, a display data synthesizing section 610, an UI display control section 111, a display selecting section 112, a video output section 613, an audio data analyzing section 414, an audio output section 615, a tuner demodulation section 416, and a TS analyzing section 417. A caption transmitting device comprises a transmission TS storing section 722, a transmission caption/text document data converting section 723 (hereinafter referred to as a transmission document data converting section 723), and a modulation transmission section 724. The transmission TS storing section 722 is the same as the TS storing section 516 of the fifth embodiment.

The transmission document data converting section 723 receives data in the transport stream format of the MPEG2 system as transport stream data. The transmission document data converting section 723 converts caption/text data represented by 8 unit code characters in data unit data included in the transport data stream into BML document data, and outputs the BML document data as a transport stream. The transmission document data converting section 723 is implemented by, for example, software. A method for converting caption/text data represented by 8 unit code characters into BML document data is the same as that in the first embodiment.

The modulation transmission section 724 receives data in the transport stream format of the MPEG2 system. The modulation transmission section 724 is implemented by a combination of software and hardware (including a transmitter) for modulating received data into carrier waves in the OFDM scheme and transmitting the carrier waves.

As described above, according to the caption display device 701 of the seventh embodiment of the present invention, an effect similar to that of the first embodiment can be obtained. Also, according to the caption display device 701, a sender can convert caption/text data in a transport stream into a BML document before transmission.

The procedures performed by the caption display devices of the first to seventh embodiments may be each implemented by causing a CPU to interpret and execute predetermined program data capable of executing the above-described procedure, the program being stored in a storage apparatus (a ROM, a RAM, a hard disk, etc.). In this case, the program data may be introduced into the storage apparatus via a recording medium, or may be executed directly from the recording medium. The recording medium refers to a semiconductor memory, such as a ROM, a RAM, a flash memory or the like; a magnetic disk memory, such as a flexible disk, a hard disk or the like; an optical disc, such as a CD-ROM, a DVD, a BD or the like; a memory card; or the like. The recording medium is a concept including a communication medium, such as a telephone line, a transfer line, or the like.

The parts of the caption display devices of the first to seventh embodiments can be each implemented as an integrated circuit (LSI). The parts may be mounted on respective separate chips, or a part or the whole of the parts may be mounted on one chip. LSI is called IC, system LSI, super LSI or ultra LSI, depending on the packaging density.

The integrated circuit is not limited to LSI. The integrated circuit may be achieved by a dedicated circuit or a general-purpose processor. Further, a Field Programmable Gate Array (FPGA) which can be programmed after LSI production or a reconfigurable processor in which connection or settings of circuit cells in LSI can be reconfigured after LSI production, may be used. Furthermore, if an integrated circuit technology which replaces LSI is developed by an advance in the semiconductor technology or the advent of other technologies derived therefrom, the functional blocks may be packaged using such a technology. A biotechnology may be applicable.

### INDUSTRIAL APPLICABILITY

The caption display device of the present invention has the effect of improving the operability of the user and the viewability of a caption in terms of viewing of a caption, and is useful as a television receiver, a content reproduction apparatus with a caption, or the like.

## Claims

1. A caption display device for obtaining stream data including at least caption/text stream data and section data as content data, and displaying the obtained content data on a screen, the device comprising:
a stream analyzing section for analyzing the caption/text stream data included in the stream data, and outputting caption/text data to be displayed;
a section analyzing section for analyzing the section data included in the stream data, and converting the section data into first document data;
a document data converting section for converting the caption/text data output from the stream analyzing section into second document data in the same format as that of the first document data, and outputting the second document data along with layout data designating a display region for the second document data; and
a display data generating section for generating display data relating to caption/text based on the first document data output from the section analyzing section, and the second document data and the layout data output from the document data converting section.

2. The caption display device according to claim 1, wherein the stream analyzing section further outputs caption presentation time information indicating a presentation time for the caption/text data,
the caption display device further comprises a display control section for requesting the display data generating section to update the display data, based on timing indicated by the caption presentation time information, and
the display data generating section, when receiving the update request from the display control section, updates the display data relating to the caption/text.

3. The caption display device according to claim 1, further comprising:
a presentation data converting section for converting the caption/text data output from the stream analyzing section into image data, and presenting the image data as caption/text image data;
a video data analyzing section for analyzing video stream data included in the stream data, and outputting video data;
a display selecting section for determining whether or not the caption/text image data is to be superimposed and displayed on the video data;
a display data synthesizing section for outputting the video data, or synthesized video display data obtained by superimposing the caption/text image data on the video data, in accordance with the determination by the display selecting section; and
a video output section for displaying, on the screen, the video data or synthesized video display data output by the display data synthesizing section, and the display data relating to the caption/text generated by the display data generating section.

4. The caption display device according to claim 3, wherein the display data synthesizing section outputs the video data when the display selecting section determines that the caption/text image data is not to be superimposed and displayed on the video data, and
the display data synthesizing section superimposes the caption/text image data on video data, and outputs the synthesized data as the synthesized video display data when the display selecting section determines that the caption/text image data is to be superimposed and displayed on the video data.

5. The caption display device according to claim 1, wherein the display data generating section generates and outputs, as mask data, a bitmap image representing a region for displaying the second document data, in addition to the display data relating to the caption/text,
the caption display device further comprises:
a video data analyzing section for analyzing video stream data included in the stream data, and outputting video data;
a display selecting section for determining whether or not the display data relating to the caption/text is to be superimposed and displayed on the video data;
a display data synthesizing section for outputting the video data or synthesized video display data obtained by superimposing the bitmap image on the video data, and the display data relating to the caption/text, in accordance with the determination by the display selecting section; and
a video output section for displaying, on the screen, the video data or synthesized video display data output by the display data synthesizing section, and the display data relating to the caption/text generated by the display data generating section,
the display data synthesizing section outputs the video data and the display data relating to the caption/text when the display selecting section determines that the display data relating to the caption/text is not to be superimposed and displayed on the video data, and
the display data synthesizing section outputs the synthesized video display data and the display data relating to the caption/text when the display selecting section determines that the display data relating to the caption/text is to be superimposed and displayed on the video data.

6. The caption display device according to claim 1, further comprising:
a data reception section for receiving content data including the document data in the caption/text data,
wherein the document data converting section extracts the document data from the received caption/text data, and outputs the document data to the display data generating section.

7. A caption display method for obtaining stream data including at least caption/text stream data and section data as content data, and displaying the obtained content data on a screen, the method comprising:
a stream analyzing step of analyzing the caption/text stream data included in the stream data, and outputting caption/text data to be displayed;
a section analyzing step of analyzing the section data included in the stream data, and converting the section data into first document data;
a document data converting step of converting the caption/text data output from the stream analyzing step into second document data in the same format as that of the first document data, and outputting the second document data along with layout data designating a display region for the second document data; and
a display data generating step of generating display data relating to caption/text based on the first document data output in the section analyzing step, and the second document data and the layout data output in the document data converting step.

8. A program executed by a caption display device for obtaining stream data including at least caption/text stream data and section data as content data, and displaying the obtained content data on a screen, the program comprising:
a stream analyzing step of analyzing the caption/text stream data included in the stream data, and outputting caption/text data to be displayed;
a section analyzing step of analyzing the section data included in the stream data, and converting the section data into first document data;
a document data converting step of converting the caption/text data output from the stream analyzing step into second document data in the same format as that of the first document data, and outputting the second document data along with layout data designating a display region for the second document data; and
a display data generating step of generating display data relating to caption/text based on the first document data output in the section analyzing step, and the second document data and the layout data output in the document data converting step.

9. A recording medium storing a program executed by a caption display device for obtaining stream data including at least caption/text stream data and section data as content data, and displaying the obtained content data on a screen, the program comprising:
a stream analyzing step of analyzing the caption/text stream data included in the stream data, and outputting caption/text data to be displayed;
a section analyzing step of analyzing the section data included in the stream data, and converting the section data into first document data;
a document data converting step of converting the caption/text data output from the stream analyzing step into second document data in the same format as that of the first document data, and outputting the second document data along with layout data designating a display region for the second document data; and
a display data generating step of generating display data relating to caption/text based on the first document data output in the section analyzing step, and the second document data and the layout data output in the document data converting step.

10. An integrated circuit for obtaining stream data including at least caption/text stream data and section data as content data, and displaying the obtained content data on a screen, the circuit comprising:
a stream analyzing section for analyzing the caption/text stream data included in the stream data, and outputting caption/text data to be displayed;
a section analyzing section for analyzing the section data included in the stream data, and converting the section data into first document data;
a document data converting section for converting the caption/text data output from the stream analyzing section into second document data in the same format as that of the first document data, and outputting the second document data along with layout data designating a display region for the second document data; and
a display data generating section for generating display data relating to caption/text based on the first document data output from the section analyzing section, and the second document data and the layout data output from the document data converting section.
